# EUROPEAN PATENT SPECIFICATION

(11) **EP 2 806 964 B1**
(45) Date of publication and mention of the grant of the patent: **07.08.2019**
(21) Application number: 13703987.1
(22) Date of filing: 28.01.2013
(51) Int. Cl.: B01D 46/00

(54) **METHOD FOR PRODUCING A FILTER ELEMENT**
VERFAHREN ZUR HERSTELLUNG EINES FILTERELEMENTS
PROCÉDÉ DE PRODUCTION D'UN ÉLÉMENT DE FILTRATION

(30) Priority: 26.01.2012 DK 201200075; 08.06.2012 DK 201270312
(43) Date of publication of application: 03.12.2014
(73) Proprietor: AG+ ApS, 4592 Sejerby (DK)
(72) Inventor: OLSEN, Jens Steen, DK-4622 Havdrup (DK)
(74) Representative: AWA Denmark A/S
(86) International application number: PCT/DK2013/050026
(87) International publication number: WO 2013/110281

(56) References cited:
- WO-A1-2006/009341
- WO-A1-2008/132807
- US-A- 5 840 245
- US-A1- 2008 317 802
- US-B2- 6 872 241

## Description

### Introduction

The present invention relates to a method for producing a filter element having metal or metal oxide particles adhered to the fibers of the fiber element. and the use thereof. The filters may be used in ventilation systems for reducing the amount of microorganisms in the air.

### Background Art

The amount of microorganisms in the air has an influence of the well-being of humans. If the amount is too high the mucosa will become inflamed. Also, the microorganism may be pathogenic thereby causing development of a disease, such as allergy especially observed in children.

Korean patent application No. KR20060116770 discloses a clean bench. In order to purify the air flowing into the bench one or more first filters are installed in an air injection hole. The air in the circulation is contacted with a second filter and subsequently with a photo catalytic element containing titanium dioxide. An ultra violet ray lamp irradiates the photo catalytic element to clean the air. Optionally, also a second element containing nanosilver particles may be installed to enhance the sterilizing process. WO 2008/132807 discloses the use of carriers in order to fix metal or metal oxide particles to the fibers of a filter element.

The purpose of the present invention is to reduce the amount of microorganisms in the spaces or compartments humans are present in. Examples of such spaces are homes, working spaces, cars, trains, etc. Especially, the present invention addresses the problem of improving existing ventilations systems comprising a traditional filter.

### Disclosure of the invention

The present invention relates to a method for producing and using a filter element having metal or metal oxide particles adhered to the fibers of the filter element, wherein the filter element is sprayed or brushed with a media containing the metal or metal oxide particles.

In existing ventilation systems filters of a conventional type are generally available from the producers. As an example, the filter in ventilations systems or air conditioning systems in cars and trucks are available from the maker of the vehicle. Such filters will during use become infiltrated with dirt, pollen, leaves and other kind of organic material. The organic material will serve as nutrition for microorganisms, such as bacteria, molds, yeasts, etc. The microorganisms will be conveyed through the ventilation system to the compartment where a human is present and expose the person for a health risk. The present invention suggests treating the conventional filters with a media containing the metal or metal oxide particles. By this treatment, the metal or metal oxide particles will be adhered to the fibers of the fiber element. When air is conveyed through the filter in a ventilation system, the amount of microorganisms in the air will be reduced or eliminated. In this way the person present in the compartment will be exposed for less health risk from microorganisms.

In an aspect of the invention the method comprises the use of metal or metal oxide particles having a mean diameter of 10⁻⁶m or below, such as micronized silver particles. It is believed that a size below 10⁻⁶m of the particles results in a surface area, which is particularly active in the combat of the microorganisms. In the present invention the filter element having metal or metal oxide particles adhered to the fibers of the filter element is intended to be included in a ventilation system comprising a plurality of channels conveying air, one or more compartments, that need to be ventilated and at least one fan for transporting the air. Examples of compartments include living rooms, working spaces, airplane cabins, interiors of vehicles, such as trucks, cars, and ships.

It is presently believed that silver nanoparticles interact with the outer membrane of microorganisms, causing structural changes that lead to degradation and eventually death of the microbe.

The metal or metal oxide particles may be selected from a large group of components readily available to the person skilled in the art. In a preferred aspect the metal or metal oxide particles are selected from the group comprising micronized silver particles, zinc particles, cupper particles, silver particles, iron oxide particles, titanium dioxide particles, zinc oxide, aluminum oxide, or a mixture thereof. Presently preferred metal and metal oxide particles are micronized silver particles.

The metal or metal oxide particles generally have a mean diameter at or below 10⁻⁶m, such as below 10⁻⁷m, suitably below 10⁻⁸m. Generally, the metal or metal oxide particles have a diameter above 0.30 nm, such as above 0.6 nm, suitably 1 nm.

The metal or metal oxide particles are preferably of a purity over 50%, suitable above 60%, such as above 70%, preferably above 80% such as 90%. In a certain embodiment the metal or metal oxide particles, such as the micronized silver particles are prepared of silver having a purity of at least 99%, such as at least 99.9%. In a most preferred aspect the micronized silver particles are prepared of silver having a purity of about 99.9%. Present together with the micronized silver may be other particles such as sub-micron zinc oxide, aluminum oxide and/or boron nitride particles.

The metal or metal oxide particles are present in the surface of a carrier. The carrier is a hollow glass particle having a mean diameter in the range from 1 µm to 150 µm, especially from 5µm to 150µm. The hollow carrier may be designed to achieve a density compatible with the media containing the metal or metal oxide particles. In another aspect of the invention the carrier is designed with a lower density than the density of the media to allow for the particles to be transported to the surface by gravity. In an aspect of the invention the density is in the range of 1 to 4 g/cm³, such as between 2 and 3 g/cm³.

The metal or metal oxide particles, present on a carrier, may be formulated into a paint, lacquer, varnish, or another media before application. The media is preferably of a type admitting vapor to diffuse through the cured media, e.g. a so-called diffusion-open paint.

The metal or metal oxide particles may be incorporated in at least the surface of the filter used in the ventilation system. In an embodiment of the invention an ultraviolet (UV) source is provided in proximity to the surface provided with metal or metal oxide particles. The presence of the UV source improves the effectiveness of the filter, thereby increasing the amount of microorganisms being removed. UV light has a wavelength in the range of 10 nm to 520 nm.

In a certain application of the invention it relates to a filter mat or element, i.e. a porous structure mainly composed of a plurality of inter-connected fibers, where the metal or metal oxide particles have been added to the filter element by spraying or brushing with a media containing the metal or metal oxide particles.

The media suitably comprises a binding agent ensuring the metal or metal oxide particle to be adhered to the fibers of the fiber element. Suitably, the media is a paint or varnish having metal or metal oxide particles incorporated. The filter element may be used in air ventilation systems, including air circulation, air heating, air cooling, air humidity, and air conditioning.

The binder used in the media may any suitable subsatnce that can cause adhesion of the particles to fibers of the filter. In general the binder is a liquid component, which solidifies after application of the media to the filter to adhere the particles to the filter. Examples of binders are poly(meth)acrylic acid, poly(meth)acrylic acid esters, linseed oil, pure acrylic polymers, polystyrene, styrene/acrylate copolymers, polyvinyl acetate, methylcellulose, ethylcellulose, vinyl acetate copolymers with acrylic acid esters, vinyl acetate copolymers with dibutyl maleate, vinyl acetate copolymers with vinyl esters of fatty acids, acacia, alginic acid, carboxymethylcellulose, sodium compressible sugar, ethylcellulose gelatin, liquid glucose, metylcellulose, povidone, pregelatinized starch.

A suitable polymer dispersion as a binder has been found to be a pure acrylic dispersion. In another aspect of the invention a suitable binder is a copolymer of vinyl acetate and vinyl ester of a fatty acid.

The media may comprise further conventional excipients such as conventional dispersing aids, anti-settling agents, water-binding agents, corrosion inhibitors, defoamers, thickeners, pH adjusters, fillers, detergents, and pigments.

The media may contain the individual components in suitable amounts and relative proportions. In a preferred aspect, the amount of metal or metal oxide particle is present in the media in an amount of 0.1 to 10% by weight, more preferred in an amount of 0,1% to 1%. The binder may be present in the media in an amount sufficient for ensuring adherence of the particles to the fibers. Usually, an amount of 5-50% by weight, such as 15-30% by weight is suitable. Since the media may have a tendency to foam it is desirable to include a defoamer, such as a mineral oil. Other defoamers suitably include vegetable oils, white oil, hydrophobic silica, and waxes. The defoamer may be included in the formulation of the media in an amount of 0.01 to 5% by weight. Water is used alone or in combination with one or more co-solvents. The cosolvent may be selected among ethanol, ethylene glycol, propylene glycol, acetone, methylethylketone, diethylether, pentane, hexane, heptane, or octane etc. Water is used in the media in an amount to obtain a suitable viscosity. Suitable amounts of water include 20-95% water.

The media may be applied on the fibers of the conventional filter in any suitable way, including brushing and spraying. When the media is intended for spraying on the fibers, it may be supplied in a contained suitable for spraying, such as a pressurized container. Alternatively, the media may be supplied to the used in a container with instructions to atomize the media through a suitable nozzle. The media may be atomized by pressurized air, such as a spray gun or a spray brush. In the alternative, the media may be applied by a brush to the surface of the filter. After application of the media, the media is usually allowed to cure, thereby attaching the metal or metal oxide particles to the fibers of the fiber.

In a certain aspect of the invention the inner surface of an inlet of an air conveying channel, which is a part of a ventilation system, may be provided with a filter containing metal or metal oxide particles by e.g. application of a media, such as a paint comprising metal or metal oxide particles on the filter. When air is transferred through the conveying channel into a room of the ventilation system, it will be brought into contact with the metal or metal oxide particles before entering the room. Also the outlet may be provided with metal or metal oxide particles in a similar way. Hereby, the amount of microorganisms that might be suspended in the air is reduced. To enhance the contact between microorganisms suspended in the air flow and the inner surface of the channel, the channel may further be provided with structures providing for a higher contact between the air and the surface of the channel. The structures may be provided to deflect the air flow.

The inlet and/or the outlet may also be provided with a filter, which has adhered metal or metal oxide particles. The filter is installed to ensure that most, preferably the entire amount of air flow is filtered through the filter, thereby reducing the amount of microorganisms in the air. Furthermore, the inner surface of the channel may be provided with metal or metal oxide particles in a length of at least 20 cm, such as at least 1 m from the inlet or the outlet.

The structure may in itself be provided with metal or metal oxide particles. To enhance the efficiency the channel may be provided with a lamp providing UV radiation, e.g. radiation in the range of 400 to 520 nm.

When the invention is applied to a ventilation system, it may be used in surgeon rooms or other rooms requiring high degrees of cleanness. Other applications include cars, tractors, trains, private homes, trucks, air-condition for apartments and hotels, air planes, working spaces, vacuum cleaners. The filters of the invention may also be used as pollen filter in cars and trucks.

The following examples are useful for the understanding of the invention but do not refer to metal or metal oxide particles present on hollow glass carriers as claimed.

### Example 1

### Inhibition of mold growth

Two cultures of the commonly occurring molds Cladosporium and Stachybotrys were cultured in the dark at 25 degrees on fungal substrates applied either 2 mL of sterile water or 2 mL of a silver particles solution, and then subject to filter paper (Whatman).

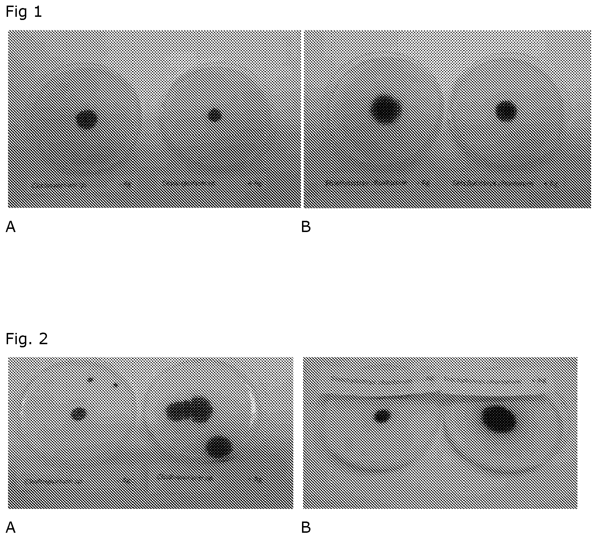

In a first experiment, the mold developed as a single inoculation in the center of the filter paper placed on top of a nutrient-rich medium (oat meal agar) and then cultured for 7 days. Results are shown in Figure 1A and 1B.

Similar molds were in the second experiment grown in a less nutrient-rich medium (minimal medium) for 14 days. Both tests can be considered worst case scenarios due to the rich substrates and high temperature. The results are shown in Fig. 2A and 2B.

Fig. 1 shows that the addition of 2 mL of silver particles solution has growth inhibitory effect on both Cladosporium and Stachybotrys cultures, although the fungi have been awarded optimal growth conditions in a very nutrient-rich substrate. Fig. 2 shows similarly a clear growth inhibitory effect when cultures are grown for fourteen days at a less nutritious, but still sugar containing substrate.

In conclusion the silver particles have a clear growth inhibiting effect on the frequently occurring molds *Cladosporium* and *Stachybotrys.* It is noted that the inhibiting effect is most pronounced on the minimal media. This fact suggest that the effect will be stronger on more natural less nutrition-rich substrates such as humid filters only containing a small amount of organic material.

### Example 2

### Media containing silver particles

### Composition

0.5 % by weight micronized silver particles
0.2 % by weight of mineral oil defoamer
20 % by weight of polyacrylic dispersion
Water to 100 % by weight.

The components are mixed together and a dispersion is obtained, which is sufficiently stable to allow for spraying a car pollen filter. After spraying of the filter with an air brush the media was allowed to cure for 1 hr at ambient temperature, so the micronized silver particles could solidify on the fibers of the filter.

## Claims

1. A method for producing a filter element mainly composed of a plurality of inter-connected fibers having metal or metal oxide particles adhered to the fibers of the filter element, wherein the filter element is sprayed or brushed with a media containing the metal or metal oxide particles, wherein the metal or metal oxide particles are present in the surface of a hollow carrier, said hollow carrier being a hollow glass particle having a mean diameter in the range from 1 µm to 150 µm, especially from 5 µm to 150 µm.

2. The method according to claim 1 wherein the carrier has a density compatible with the media containing the metal or metal oxide particles, or the carrier has a lower density than the density of the media to allow for the particles to be transported to the surface by gravity, especially the density of the carrier is in the range of 1 g/cm³ to 4 g/cm³, preferably between 2 g/cm³ and 3 g/cm³.

3. The method according to any of the claims 1 to 2, wherein the metal or metal oxide particles having a mean diameter of 10⁻⁶m or below.

4. The method according to any of the claims 1 to 3, wherein the metal or metal oxide particles are selected from the group comprising micronized silver particles, zinc particles, cupper particles, iron oxide particles, titanium dioxide particles, zinc oxide, aluminum oxide, or a mixture thereof.

5. The method according to claim 4, wherein the metal and metal oxide particles are micronized silver particles.

6. The method according to any of the claims 1 to 5, wherein the purity of the metal or metal oxide used in the particles is 99% or above.

7. The method according to any of the claims 1 to 6, wherein the metal or metal oxide particles are incorporated in media comprising a binding agent.

8. The method according to any of the claims 1 to 7, wherein the binding agent is an acrylic dispersion.

9. The method according to any of the claims 1 to 8, wherein the media incorporating the metal or metal oxide particles is aqueous.

10. The method according to any of the claims 1 to 9, wherein the media comprises 15-30% of an acrylic dispersion.

11. The method according to any of the claims 1 to 10, wherein the metal or metal oxide particles is present in the media in an amount of 0.1 to 10% by weight.

12. The method according to any of the claims 1 to 11, wherein an UV source is provided in proximity to a surface provided with metal or metal oxide particles.

13. Use of a filter element produced by the method according to any of the claims 1 to 12, wherein the metal or metal oxide particles are present on a filter element in the inlet part or outlet part of an air circulation system.

14. Use of a filter element according to claim 13, wherein the metal or metal oxide particles are present on at least the surface of the filter element used in the ventilation system.

15. Use of a filter element according to claims 13 - 14, wherein the ventilation system is provided with structures deflecting the air flow.

16. Use of a filter element according to claims 13-15, wherein the filter is provided in a system comprising a plurality of channels conveying air, one or more compartments provided with an inlet channel and an outlet channel, and at least one fan for transporting the air, wherein at least one of the compartments include a room, a working space, an airplane cabin, an interior of a vehicle, such as a truck, a car, and a ship; or a vacuum cleaner.

## Patentansprüche

1. Verfahren zum Herstellen eines Filterelements, das hauptsächlich aus mehreren miteinander verbundenen Fasern besteht, die Metallpartikel oder Metalloxidpartikel aufweisen, die an den Fasern des Filterelements haften, wobei das Filterelement mit einem Medium besprüht oder gebürstet wird, welches die Metallpartikel oder Metalloxidpartikel enthält, wobei die Metallpartikel oder die Metalloxidpartikel in der Oberfläche eines hohlen Trägers vorhanden sind, wobei der hohle Träger ein hohler Glaspartikel mit einem mittleren Durchmesser im Bereich von 1 µm bis 150 µm, insbesondere von 5 µm bis 150 µm aufweist.

2. Verfahren nach Anspruch 1, wobei der Träger eine Dichte aufweist, die mit dem Medium, welches die Metallpartikel oder die Metalloxidpartikel enthält, kompatibel ist, oder der Träger eine geringere Dichte als die Dichte des Mediums aufweist, damit die Partikel durch Schwerkraft zur Oberfläche transportiert werden können, wobei die Dichte des Trägers im Bereich von 1 g/cm³ bis 4 g/cm³, vorzugsweise zwischen 2 g/cm³ und 3 g/cm³ liegt.

3. Verfahren nach einem der Ansprüche 1 bis 2, wobei die Metallpartikel oder die Metalloxidpartikel einen mittleren Durchmesser von 10⁻⁶ m oder kleiner aufweisen.

4. Verfahren nach einem der Ansprüche 1 bis 3, wobei die Metallpartikel oder die Metalloxidpartikel ausgewählt sind aus der Gruppe, umfassend mikronisierte Silberpartikel, Zinkpartikel, Kupferpartikel, Eisenoxidpartikel, Titandioxidpartikel, Zinkoxid, Aluminiumoxid oder eine Mischung davon.

5. Verfahren nach Anspruch 4, wobei die Metallpartikel und die Metalloxidpartikel mikronisierte Silberpartikel sind.

6. Verfahren nach einem der Ansprüche 1 bis 5, wobei die Reinheit des Metalls oder Metalloxids, das in den Partikeln verwendet wird, 99% oder darüber beträgt.

7. Verfahren nach einem der Ansprüche 1 bis 6, wobei die Metallpartikel oder die Metalloxidpartikel in einem Medium integriert sind, das ein Bindemittel umfasst.

8. Verfahren nach einem der Ansprüche 1 bis 7, wobei das Bindemittel eine Akryldispersion ist.

9. Verfahren nach einem der Ansprüche 1 bis 8, wobei das Medium, welches die Metallpartikel oder die Metalloxidpartikel enthält, wässrig ist.

10. Verfahren nach einem der Ansprüche 1 bis 9, wobei das Medium 15 bis 30% einer Akryldispersion umfasst.

11. Verfahren nach einem der Ansprüche 1 bis 10, wobei die Metallpartikel oder die Metalloxidpartikel in dem Medium in einer Menge von 0,1 bis 10 Gew.-% vorhanden sind.

12. Verfahren nach einem der Ansprüche 1 bis 11, wobei eine UV-Quelle in der Nähe einer Oberfläche bereitgestellt ist, die mit Metallpartikel oder Metalloxidpartikeln bereitgestellt ist.

13. Verwendung eines Filterelements, das durch das Verfahren nach einem der Ansprüche 1 bis 12 hergestellt wurde, wobei die Metallpartikel oder die Metalloxidpartikel auf einem Filterelement im Einlassteil oder Auslassteil eines Luftzirkulationssystems vorhanden sind.

14. Verwendung eines Filterelements nach Anspruch 13, wobei die Metallpartikel oder die Metalloxidpartikel auf mindestens der Oberfläche des Filterelements vorhanden sind, das in dem Belüftungssystem verwendet wird.

15. Verwendung eines Filterelements nach einem der Ansprüche 13 bis 14, wobei das Belüftungssystem mit Strukturen bereitgestellt ist, die den Luftstrom umlenken.

16. Verwendung eines Filterelements einem der Ansprüche 13 bis 15, wobei der Filter in einem System bereitgestellt ist, das mehrere Luftförderkanäle, eine oder mehrere Kammern, die mit einem Einlasskanal und einem Auslasskanal und mindestens einem Gebläse zum Transportieren der Luft bereitgestellt sind, umfasst, wobei mindestens eine der Kammern einen Raum, einen Arbeitsbereich, eine Flugzeugkabine, einen Innenraum eines Fahrzeugs, wie eines Lkw, eines Pkw oder eines Schiffes; oder einen Staubsauger aufweist.

## Revendications

1. Procédé de fabrication d'un élément filtrant constitué principalement d'une pluralité de fibres interconnectées comportant des particules de métal ou d'oxyde de métal adhérant aux fibres de l'élément filtrant, dans lequel on applique par pulvérisation ou au pinceau sur l'élément filtrant un véhicule contenant les particules de métal ou d'oxyde de métal, dans lequel les particules de métal ou d'oxyde de métal sont présentes à la surface d'un support creux, ledit support creux étant une particule de verre creuse ayant un diamètre moyen de 1 µm à 150 µm, en particulier de 5 µm à 150 µm.

2. Procédé selon la revendication 1, dans lequel le support a une densité compatible avec le véhicule contenant les particules de métal ou d'oxyde de métal, ou le support a une densité inférieure à la densité du véhicule pour permettre aux particules d'être transportées à la surface par gravité, en particulier la densité du support est de 1 g/ cm³ à 4 g/cm³, préférablement de 2 g /cm³ à 3 g/cm³.

3. Procédé selon l'une quelconque des revendications 1 ou 2, dans lequel les particules de métal ou d'oxyde de métal ont un diamètre moyen de 10⁻⁶m ou moins.

4. Procédé selon l'une quelconque des revendications 1 à 3, dans lequel les particules de métal ou d'oxyde de métal sont sélectionnées dans le groupe comprenant des particules d'argent micronisé, des particules de zinc, des particules de cuivre, des particules d'oxyde de fer, des particules de dioxyde de titane, l'oxyde de zinc, oxyde d'aluminium, ou un mélange de ceux-ci.

5. Procédé selon la revendication 4, dans lequel les particules de métal et d'oxyde de métal sont des particules d'argent micronisé.

6. Procédé selon l'une quelconque des revendications 1 à 5, dans lequel la pureté du métal ou de l'oxyde de métal utilisé dans les particules est de 99 % ou plus.

7. Procédé selon l'une quelconque des revendications 1 à 6, dans lequel les particules de métal ou d'oxyde de métal sont incorporées dans un véhicule comprenant un liant.

8. Procédé selon l'une quelconque des revendications 1 à 7, dans lequel le liant est une dispersion acrylique.

9. Procédé selon l'une quelconque des revendications 1 à 8, dans lequel le véhicule où sont incorporées les particules de métal ou d'oxyde de métal est aqueux.

10. Procédé selon l'une quelconque des revendications 1 à 9, dans lequel le véhicule comprend 15 à 30 % d'une dispersion acrylique.

11. Procédé selon l'une quelconque des revendications 1 à 10, dans lequel les particules de métal ou d'oxyde de métal sont présentes dans le véhicule dans une quantité de 0,1 à 10 % en poids.

12. Procédé selon l'une quelconque des revendications 1 à 11, dans lequel une source d'UV est disposée à proximité d'une surface pourvue de particules de métal ou d'oxyde de métal.

13. Utilisation d'un élément filtrant produit par le procédé selon l'une quelconque des revendications 1 à 12, dans laquelle les particules de métal ou d'oxyde de métal sont présentes sur un élément filtrant dans la partie correspondant à l'entrée ou la partie correspondant à la sortie d'un système de circulation d'air.

14. Utilisation d'un élément filtrant selon la revendication 13, dans laquelle les particules de métal ou d'oxyde de métal sont présentes sur au moins la surface de l'élément filtrant utilisé dans le système de ventilation.

15. Utilisation d'un élément filtrant selon les revendications 13 ou 14, dans laquelle le système de ventilation est pourvu de structures qui dévient le flux d'air.

16. Utilisation d'un élément filtrant selon les revendications 13 à 15, dans laquelle le filtre est disposé dans un système comprenant une pluralité de canaux de transport d'air, un ou plusieurs compartiments pourvus d'un canal d'entrée et d'un canal de sortie, et au moins un ventilateur pour le transport de l'air, dans lequel au moins l'un des compartiments comprend une pièce, un espace de travail, une cabine d'avion, un intérieur d'un véhicule, tel qu'un camion, une voiture, et un navire ; ou un aspirateur.
